# EUROPEAN PATENT APPLICATION

(11) **EP 3 258 295 A1**
(43) Date of publication of application: **20.12.2017**
(21) Application number: 16175003.9
(22) Date of filing: 17.06.2016
(51) Int. Cl.: G01V 1/38, G01S 7/521, G10K 11/00, G01S 15/89

(54) **APPARATUS FOR PERFORMING OFFSHORE UNDERWATER SURVEYS**

(71) Applicant: DONG Energy Wind Power A/S, 7000 Fredericia (DK)
(72) Inventor: HAWA, Mohamad Nour, 8200 Aarhus (DK); CHRISTENSEN, Dan Normann, 7000 Fredericia (DK); ROTHMANN, Henrik Lynge, 4571 Grevinge (DK)
(74) Representative: Awapatent A/S

(57) **Abstract**

Apparatus for performing offshore underwater surveys, said apparatus comprising an equipment pod (6) mounted on a pole (7). The pole (7) is mounted in a movable manner on a carrier (15). The apparatus comprises means for attaching said carrier (15) to the hull (2) of a vessel (1) in a releasable manner.

## Description

The present invention relates to equipment for offshore surveying, more specifically vessel attached over the side surveying equipment, such as, but not limited to, sonar equipment.

In the offshore industry such as offshore wind farms there is a need for surveying the seabed. Not all such surveys are large operations, some are smaller geophysical surveys.

One example of such a survey is debris clearance surveys prior to jack-up operations at the wind turbines. Both bathymetric survey and a seabed surface survey are required in order to identify seabed debris of any kind and the updated water depths. Although small in scope, the time schedule for these surveys is often very tight. Also, it is very important to be able to act fast with this type of survey, as it is very expensive to have a turbine standing still, and also the possible waiting time for a jack-up vessel is very expensive.

Other surveys include bathymetry surveys at cable crossings, where scour has been registered/is potential to occur, bathymetry surveys at limited numbers of turbines and array cables, to regularly monitor scour development, debris surveys for identifying dropped objects and the like which must be cleared upon establishment of an offshore wind farm, and in principle any other small, time critical or special survey, where the normal larger setup with contractors is not preferred.

For such surveys, it has been proposed to use the already charted site crew transfer vessels that are used for daily operations and maintenance for wind technicians. Having transported technicians to wind farms, the crew transfer vessels often have several hours of idle time before the technicians is to be returned or transferred to a different wind turbine. However, fitting the crew transfer vessels with the surveying equipment involves some difficulties. The sonar and other equipment used for the survey is normally mounted on a pole attached to the vessel, e.g. on a pivot, allowing the equipment to be lowered into the water during survey, and be lifted out of the water when the crew transfer vessel is sailing at normal speed, e.g. during transfer from harbour to wind farm. Mounting the pole on the vessel is one such difficulty. Welding it onto the outside of vessel's hull of course is possible, but to some extent incompatible with the above-mentioned smaller surveys, as upon the welding vessel needs to be inspected and re-certified, e.g. because the welding process may involve removal of fire retarding insulation or the like on the inside of the vessel's hull. Accordingly, one would want such an installation to be more or less permanent. However, the vessels are typically chartered for less about three years which somewhat contradicts the permanent installation, and going through the inspection and certification every time a new vessel is chartered is undesirable.

Based on this prior art it is the object of the invention to provide a solution for using a crew transfer vessel or a similar non-dedicated vessel for offshore surveys.

According to a first aspect of the present invention this object is achieved by providing an apparatus for performing offshore underwater surveys said apparatus comprising an equipment pod mounted on a pole, said pole being mounted in a movable manner on a carrier, characterized in that said apparatus comprises means for attaching said carrier to the hull of a ship in a releasable manner.

Thereby an apparatus that can be readily moved from one vessel and installed on another without necessitating inspection and certification of the vessel is provided. This has the further advantage that the equipment may be easily moved around between vessels at different locations. That is to say, between different vessels in different ports. This in turn means that it can quickly be put to use in a different wind farm, even if this wind farm is serviced using vessels based in another port. The apparatus may then be transported faster and cheaper as compared to sea transport, as would be the case if it was permanently installed on a vessel. Such transport could be overland, e.g. on a lorry, a car trailer or on a train, or in urgent cases the apparatus could even be flown in a helicopter or other aircraft.

According to a second aspect of the present invention the object is achieved by a method for performing offshore underwater surveys comprising the steps of providing a vessel having a hull, attaching a apparatus according to any one of the preceding to said hull, lowering the equipment pod on the pole into the water, performing the measurements required for the survey. Thereby, any suitable vessel, such as a crew transfer vehicle can readily be used for surveying an offshore site and costly idle time on the offshore site is avoided.

According to a first embodiment according to the first aspect of the invention, said means for attaching said carrier comprises suction pads, connected to a vacuum source. Surprisingly, vacuum mounting using suctions pads, provides sufficient hold for the apparatus, even when the pole with the equipment pod is immersed in the water, and the vessel is sailing at speeds suitable for surveying. Typical speeds for surveying is 4-5 knots but the apparatus has been tested at 10 knots without problems. Moreover, unlike other fastening means such as electro magnets or permanent magnets, vacuum is immediately compatible with other materials from which the hull of the vessel may be made. That is to say vacuum will also work on aluminium, wood or fibreglass hulls, and not only on steel.

According to another embodiment according to the first aspect of the invention said pole further carries location detecting equipment at a location spaced from said equipment pod. Having the location detecting equipment, such as a Global Navigation Satellite System (GNSS), or the antennas thereof, mounted on the pole, allows a simple reference between the equipment pod and the position detection means, as the distance between them can simply be measured using a measuring tape or the like. This would not be the case if the reference was to be made to the vessel's own onboard positioning and navigation equipment, because the position of the carrier may vary on the vessel's hull. In that case a land surveyor would be required to measure out the offsets between the positioning equipment and the equipment pod. This not only would add extra direct costs for the land surveyor's services, but would also involve a further, possibly delaying, time factor.

According to yet another embodiment according to the first said aspect of the invention the suction pads are articulated with respect to said carrier. Articulated suction pads, e.g. using a ball joint or a dual axis joint, allows the frame to be mounted on differently curved vessel hulls or at different suitable locations on a hull, largely independently of the curvature. Currently dual axis joints are preferred over ball joints, because dual axis joints are considered less rigid and more durable in the long run.

According to a further embodiment according to the first aspect of the invention, at least some of said suction pads are repositionable with respect to said carrier. This allows them to be positioned where they best fit the curvature of the vessel's hull, and even for the same frame to be used on either side of the vessel, be it starboard side or port side, or even at the bow or stern.

According to yet a further embodiment of the first aspect of the invention, the diameter of the vacuum pads is in the range of range of 20 to 40 cm, preferably in the range from 25 cm to 35 cm, most preferred in the range from 25 cm to 30 cm, and in particular approximately 28 cm. Experiments have shown that vacuum pads with these dimensions will suffice to secure and hold the apparatus firmly against the hull.

According to another embodiment of according to the first aspect of the invention the frame comprises alignment means. This allows the frame and, in turn, the pole to be aligned with the vessel, so as to ensure best possible orientation of the equipment pod.

The invention will now be described in greater detail based on nonlimiting exemplary and with reference to the drawings, on which
Fig. 1 is a schematic representation of the apparatus of the present invention in use on a vessel as seen from the stern,
Fig. 2 is a schematic representation of the apparatus of Fig. 1 in a transport position on the vessel as seen from the stern,
Fig. 3 is a more detailed but still schematic view seen from the starboard side of the vessel of the apparatus according to the invention in the transport position,
Fig. 4 is a schematic perspective view of the apparatus of Fig. 3 in the transport position.

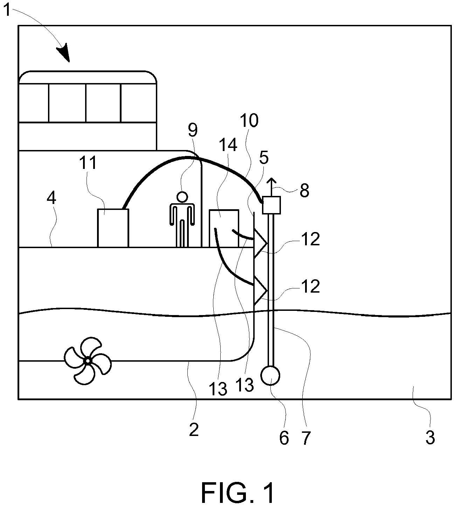

Turning first to Fig. 1 a view from the stern of a sea vessel 1, such as a ship, in particular but not limited to a Crew Transfer Vessel (CTV) for offshore sites, such as wind farms. The vessel 1 has a hull 2 which is partially immersed in the water 3 being surveyed. The vessel 1 has a deck 4 and railing 5, both of which are in this context considered to form part of the hull 2.

On the starboard side of the vessel 1 the surveying equipment is mounted. The surveying equipment *inter alia* comprises an equipment pod 6 adapted to be immersed in the water 3, as illustrated in Fig. 1. The equipment pod 6 accommodates the actual measuring devices such as acoustic transducers for sonar or seismic sensing, or the like, depending on the nature of the survey. Examples of equipment could be Phase Differencing Bathymetric Sonar (PDBS), Multi Beam Echo Sounder (MBES), Ultra Short Baseline Locator (USBL), or other subsea location beacons. The equipment pod 6 is mounted on a pole 7, preferably at one end thereof. The pole 7 is preferably made of metal such as stainless steel, galvanized steel or of aluminium, but other corrosion resistant materials may also be used. The pole 7 also carries additional surveying equipment, such as a position sensing means, e.g. a GNSS receiver or the antennas 8 thereof at a location spaced from said equipment pod 6. GNSS exists in many variants, such as GPS, GLONASS, or BEIDOU. These systems may be used alone or in combination, as preferred This additional surveying equipment is preferably located at the opposite end of the pole 7, e.g. on a T-shaped end piece 24. Having the location detecting equipment, such as GNSS, or the antennas 8 thereof, mounted on the pole, allows a simple reference between the equipment pod 6 and the position detection means, as the distance between them can simply be measured using a measuring tape or the like or by knowing in advance the length of the pole. This would not be the case if the reference was to be made to the vessel's own onboard positioning and navigation equipment, because as will be explained below, the position of the frame may vary on the hull 2 of the vessel 1. In the latter case a land surveyor would be required to measure out the distance between the positioning equipment and the equipment pod 6. This not only would add extra direct costs for the land surveyor's services, but would also involve a further, possibly delaying, time factor. The surveyor 9 operating the equipment on board the vessel 1 is not necessarily a qualified land surveyor.

The pole 6 is generally a tube through which supply and signal cables would, at least in part, normally run. However, from the non-immersed end of the pole or in the vicinity thereof, supply and signal cables 10 would lead to data collecting and processing equipment 11, such as a suitably rugged portable computer.

As mentioned above, the position of the surveying equipment, in particular the equipment is preferably not referred to the on board navigation system of the vessel 1. This is because the basic idea of the present invention is the temporary installation. Thus, the equipment may be moved around between completely different vessels 1, and the exact reference to the on board navigation is thus uncertain. Also, even with one and the same vessel 1 it will be possible to mount the apparatus at different locations on the hull 2, e.g. at the bow or along either starboard or port side. In principle it could even be mounted at the stern, but in that case propeller and other turbulence may influence measurements. Currently, starboard beam is preferred, in order to facilitate the alignment of the equipment pod 6 with the heading of the vessel 1 when surveying.

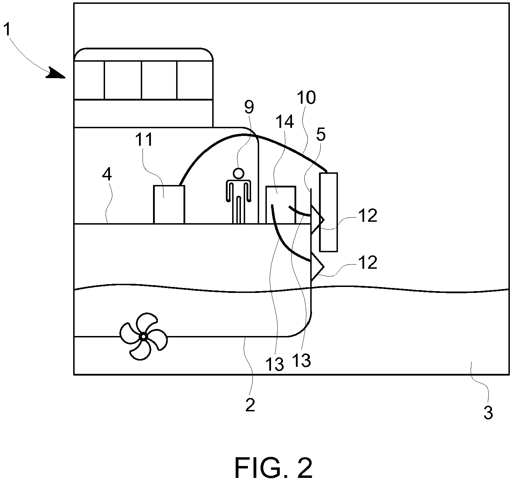

As can be seen from Fig. 1, the temporary installation is made using a number of vacuum pads 12, preferably three as will be explained below, though only two are visible in Figs. 1 and 2. The vacuum pads 12 are, via vacuum hoses 13, connected to a pump 14 or the intake of a compressor capable of providing a pressure suitably below atmospheric pressure. Preferably, there are three independent vacuum circuits and thus three independent hoses, so as to provide some failsafe in case one circuit or vacuum pad 12 should fail. Experience has shown that at the locations on the hull 2 above the waterline, where it is desired to attach the apparatus of the invention, are sufficiently smooth to allow the pump only to operate intermittently, even if no vacuum reservoir tank is used. Several hours of intermission is realistic, even without a tank. Nonetheless, a tank is preferred and pressure sensors are installed to set off a warning, preferably acoustic, should the pressure in the vacuum pads 12 get too close to atmospheric pressure. Should a problem or failure occur in the vacuum system there would thus be plenty of time to solve the problem, or secure the apparatus. As will be explained further below, precautions have of course been taken to prevent the apparatus to be lost at sea.

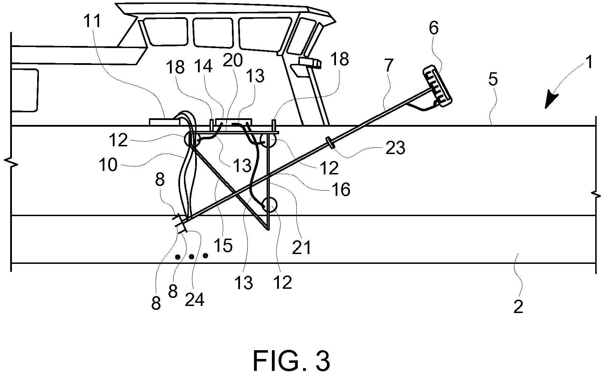

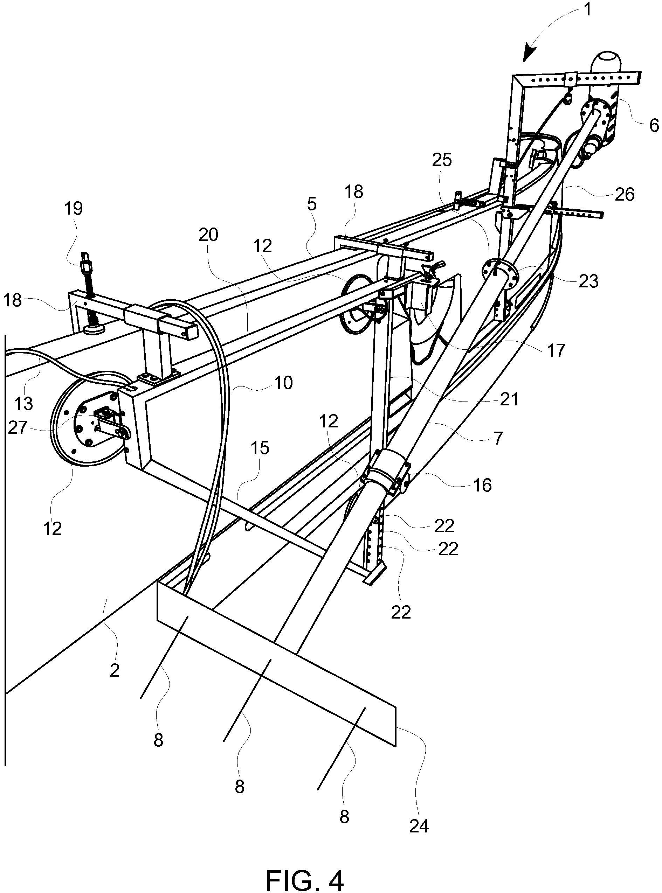

Fig. 2 schematically shows how the surveying equipment has been swung out of the water, to the transport position in which it is shown in greater detail in Figs. 3 and 4, albeit still schematically.

As can be seen in Fig. 3 the pole 7 with the equipment pod 6 at one end and the antennas 8 at the other end mounted on a carrier. The carrier is preferably a frame 15 and has a generally triangular shape, corresponding to the use of three vacuum pads 12 arranged more or less in each corner of the triangle, thus ensuring stable attachment of the frame 15 with no possibility of rocking. The suction pads 12 are mounted to the frame 15 in articulated manner e.g. a dual axis joint 27 as illustrated in Fig. 4, a ball joint or other joint providing at least two degrees of freedom, so as to adapt to and abut the surface of the hull 2 irrespective of curvature. Using three vacuum pads 12 allows good attachment of the frame 15 to the hull 2 of the vessel, almost irrespective of the curvature of the hull 2. These three vacuum pads 12 suffice to hold the frame and hence the entire surveying apparatus firmly against the hull 2, even when the vessel 1 is sailing at survey speeds with the equipment pod 6 immersed.

To immerse the equipment pod 6 the pole 7 is swung down to a vertical position about a pivot point 16 on the frame 15. To ensure the vertical position in the lengthwise direction of the vessel a stop 17 against which the pole 7 abuts and can be secured is provided on the frame, as can be seen in Fig. 4. The use of a stop 17 for ensuring the vertical position, however, requires that the frame 15 itself is aligned in the first place. This is achieved using a pair of brackets 18, also best seen in Fig 4. The brackets 18 are basically hooks that may be hung over and engage the railing 5. The brackets 18 thus also serve to save the surveying apparatus from falling into the sea 3 should the vacuum source 14 fail. As can further be seen from Fig. 4 the vacuum hoses 13 may if desired run partially inside the frame 15, so as to protect them from damage. One or both of these brackets 18 have an alignment means, e.g. a screw spindle 19, that can be adjusted in the vertical direction with respect to the frame until a suitable reference part of the frame 15 is horizontal or vertical. If the triangular frame 15 is properly constructed this may simply be verified using a spirit level on the top leg 20 of the triangular frame 15. In this respect it should be noted that though preferred the frame 15 may have any other shape.

As to the vertical position in the cross-wise direction of the vessel 1 this may be done mainly by moving the lowermost vacuum pad in the vertical direction of the frame 15. Since the hull 2 of the vessel 1 is normally curved, this will change the angle of the frame 15 with respect to the top of the railing 5 and thus allow a vertical position to be adopted. For this the vertical leg 21 of the triangular frame 15 has a number of holes 22, between which the lowermost vacuum pad 12 may be moved, and in which it may be secured. Not only the lowermost suction pad 12 may be repositionable with respect to the frame 15 in this manner, all the remaining suction pads 12 could also be similarly repositionable desired. The frame 15 and the legs thereof are preferably made of stainless steel, of galvanized steel or of aluminium tubes. Preferably the tubes of have a rectangular or square cross-sections, but other cross sections could be used. Solid bars, rather than tubes, could of course also be used, at least to the extent that their weight does not inhibit the handling of the apparatus, during transport and mounting.

Further to the vertical position it should be noted that the vertical alignment is not as such crucial. A vessel 1 at sea is not steady in the first place, and for that reason, the measuring equipment in the equipment pod 6, has inclination sensors and compensate for deviations from vertical in the measurements performed. However, the opening angle for the measurements is not normally 360 degrees, and vertical adjustment of the zero point of the measuring equipment therefore makes sense.

Since the apparatus according to the invention is to be temporarily installed on different vessels, the length of the pole 7 is also adaptable. Preferably this is achieved by making a flange joint 23 somewhere along the length of the pole 7, e.g. by bolting two flanges together with bolts 25. Thus one part of the pole 7 may be interchangeable so as to be able to select a suitable length for the vessel 1 in question. In particular the keel of the vessel 1 should not obstruct the side view from the surveying equipment. As mentioned above the opening angle for measurements is not normally 360 degrees, but some of the equipment for which the present invention is devised, such as Phase Differencing Bathymetric Sonar (PDBS) have opening angles in excess of 180 degrees. For other equipment such as Multi beam echo sounder (MBES) the angle is smaller and the obstruction from the keel is less critical.

Making the pole 7 in two parts also makes it easier and cheaper to provide the immersed part of the pole with a more complex hydrodynamical shape, e.g. cross-section, in order to stabilize it in the water, because all of the pole 7 does not have to have such a shape. Rather, the upper non-immersed part could then just be a tube with a circular cross-section. A telescopic pole could of course also be used, but would not have the same advantages in terms of the hydrodynamically shaped part.

The entire apparatus including pole 7 and frame 15 typically weighs about 75 kg not including the equipment pod which has a weight of about 20 to 30 kg. Evidently, the weight depends on the length and thickness of the pole. The length of the pole 7 may be anywhere in the interval between 3 to 7 m, and typically would be about 5 m. The thickness also depends on the length, as a longer length necessitates a thicker and stronger pole 7 in order to maintain stability with minimum flow induced vibrations of the pole 7 in the water. Typically the diameter would be in the range of 80 mm to 115 mm. For this weight and the drag resulting from these dimensions, three vacuum pads 12 each having a diameter of in the range of 20 to 40 cm have been found to suffice. More specifically vacuum pads 12 in the range from 25 cm to 35 cm diameter, are preferred. Most preferred are vacuum pads 12 in the range from 25 cm to 30 cm diameter. In the illustrated embodiment all three vacuum pads 12 have a diameter of approximately 28 cm (11 "). Evidently, the vacuum pads 12 need not have the same diameter.

It takes up to an an hour to mount the surveying apparatus according to the invention on a vessel 1 and this can be done in port or possibly even on site at the wind farm if the weather permits it. The frame 15 is hung over the railing 5 in the brackets 18, and aligned as desired using the screw spindle 19. If the angle or position is not suitable, the frame 15 may be relocated along the railing 5, or the angle of the frame 15 may be adjusted by moving the lowermost vacuum pad 12 along the vertical frame leg 21, using the holes 22. This relocation is possible because the pole 7 carries both the location equipment and the equipment pod 6 and thus ensured a well defined position relation between them. The vacuum hoses 13 are the hooked up to the vacuum source 14, which when switched on secures the apparatus to the vessel 1 in the desired well defined position. During this the pole 7 may be in a transport position, in which it may be further secured during transport. This could be on an additional bracket or gallows secured to the railing 5 further towards the bow 26, e.g. in a manner similar to the frame 15 and possibly also using vacuum.

Arriving at site the and possibly having transferred technicians to the offshore site, the surveyor 9 remains on board the vessel with the vessel crew and sets up the equipment for the survey. That involves connecting data collecting and processing equipment 11, such as a suitably rugged portable computer, to the measuring devices on the pole 7. The equipment pod 6 on the pole 7 is then swung into the water and the pole 7 secured in the desired vertical position. This lowering may be done by using a rope and/or a winch as used on sailing boats, and likewise for lifting the pole 7 back up after use.

The vessel 1 the sails the desired trajectories and measurements are made for the offshore underwater surveys are made using the apparatus according to the invention. After finishing, the data collecting and processing equipment 11 is disconnected, the pole 7 raised and secured, possibly in reverse order.

The vessel 1 then may pick up technicians for return trip to port. Since the apparatus is adapted to be attached to the vessel 1 in a releasable manner, the apparatus may, at the offshore site - but preferably in port, be detached from the vessel 1 in the same manner as it was attached, i.e. by interrupting the vacuum supply 14, disconnecting the vacuum hoses 13 and lifting the brackets 18 free of the railing 5.

The apparatus and the vacuum source 14 may then readily be transported to another vessel 1 and attached thereto in the same releasable manner in order to be put to use there. This may be done using other and far quicker means of transport than sailing, e.g. land or air transport, and thus increase the operation time for the surveying apparatus. Hence, instead of all of the vessel moving from surveying location to surveying location, only the actual surveying equipment moves.

Finally, it should be noted that one or more identical or similar apparatuses could be attached simultaneously. Having the vacuum system would also allow for different attachments, such as the above mentioned gallows. Using the vacuum for Launch and Recovery Systems (LARS) for other devices, such as Remote Operates Vehicles (ROVs), would also be possible.

## Claims

1. Apparatus for performing offshore underwater surveys, said apparatus comprising an equipment pod mounted on a pole, said pole being mounted in a movable manner on a carrier, **characterized in that** said apparatus comprises means for attaching said carrier to the hull of a vessel in a releasable manner.

2. Apparatus according to claim 1, wherein said means for attaching said frame comprises suction pads, connected to a vacuum source.

3. Apparatus according to any one of the preceding claims, wherein said pole further carries location detecting equipment at a location spaced from said equipment pod.

4. Apparatus according to any one of the preceding claims, wherein said suction pads are articulated with respect to said carrier.

5. Apparatus according to any one of the preceding claims, wherein at least some of said suction pads are repositionable with respect to said carrier.

6. Apparatus according to any one of the preceding claims wherein the diameter of the vacuum pads is in the range of range of 20 to 40 cm, preferably in the range from 25 cm to 35 cm, most preferred in the range from 25 cm to 30 cm, and in particular approximately 28 cm.

7. Apparatus according to any one of the preceding claims, wherein the carrier comprises alignment means.

8. Method for performing offshore underwater surveys comprising the steps of
providing a vessel having a hull,
attaching an apparatus according to any one of the preceding claims to said hull,
lowering the equipment pod on the pole into the water,
performing the measurements required for the survey.
